# EUROPÄISCHE PATENTSCHRIFT

(11) **EP 1 404 566 B1**
(45) Veröffentlichungstag und Bekanntmachung des Hinweises auf die Patenterteilung: **01.12.2004**
(21) Anmeldenummer: 02784848.0
(22) Anmeldetag: 09.07.2002
(51) Int. Cl.: B62D 25/16, B60R 13/08

(54) **FAHRZEUG-RADHAUSAUSKLEIDUNG**
VEHICLE WHEEL-HOUSING COVER
REVETEMENT DE PASSAGE DE ROUE POUR VEHICULE

(30) Priorität: 10.07.2001 DE 10133425
(43) Veröffentlichungstag der Anmeldung: 07.04.2004
(73) Patentinhaber: HP-CHEMIE PELZER RESEARCH & DEVELOPMENT Ltd., Waterford, County Waterford (IE)
(72) Erfinder: NICOLAI, Norbert, 46514 Schermbeck (DE); DIAS, Nelson, 59823 Arnsberg (DE)
(74) Vertreter: Jönsson, Hans-Peter, Dr.
(86) Internationale Anmeldenummer: PCT/EP2002/007612
(87) Internationale Veröffentlichungsnummer: WO 2003/006303

(56) Entgegenhaltungen:
- EP-A- 0 810 145
- WO-A-01/92085
- DE-A- 4 240 935
- DE-A- 10 001 313
- DE-A- 10 024 496

## Beschreibung

Gegenstand der vorliegenden Erfindung ist eine Fahrzeug-Radhausauskfeidung aus einem im wesentlichen der Kontur des Radhauses angepassten und an diesem befestigten Material, die durch Formgebung und Bauweise Schutz vor Korrosion durch Sandstrahleffekt, eine Verminderung des auf regennasser Fahrbahn auftretenden Sprühnebels sowie eine effektive Geräuschdämpfung auch auf trockener Straße bewirkt.

Fahrzeug-Radhausauskleidungen aus Kunststoffen, die an der äußeren Seite (zum Reifen zugewandten) von Radhäusern angebracht werden, können vielfältige Funktionen erfüllen.

So sind beispielsweise aus der DE 29 08 837 A1 sowie aus der DE 30 07 760 A1 Radhausauskleidungen bekannt, die darunter liegende metallische Werkstoffe vor Steinschlag, Schmutz und Feuchtigkeit schützen und damit dem Korrosionsschutz dienen. Diese Bauteile werden im Spritzgussverfahren aus einem Kunststoff, vorzugsweise Polypropylen, hergestellt, der gegebenenfalls mineralgefüllt oder chemisch modifiziert ist. Auf solche Weise hergestellte einschichtige Bauteile weisen ein sehr hohes Flächengewicht auf und haben darüber hinaus den Nachteil, dass ihre Absorptionsfähigkeit für Luft- oder Körperschall sehr gering ist. Dadurch werden Geräusche, die in den Radhäusern auftreten, nahezu ungedämpft in den Fahrgastraum weitergeleitet, während vom Inneren des Fahrzeugs kommender Luftschall an den solcher Art ausgestalteten Radhausauskleidungen reflektiert wird, was die Lärmbelästigung im Innenraum verstärkt.

Geräusche, die in diesem Sinne in den Radhäusern entstehen, sind in erster Linie Reifenabrollgeräusche auf trockener Fahrbahn sowie auf regennasser Fahrbahn Geräusche, die durch das Auftreffen von Spritzwasser auf den Radhausaußenflächen beziehungsweise Radhausauskleidungen entstehen, ferner Motorengeräusche (Luftschall), die an diesen Oberflächen reflektiert werden, sich damit verstärken bzw. über das Bauteil und den Befestigungspunkten ihren Weg in den Innenraum finden.

Erwähnenswert ist jedoch, dass die glatte und wasserabweisende Oberfläche dieser Bauteile eine geringe Wasseraufnahme und eine sehr gute Selbstreinigung dieser Bauteile gewährleistet. Entwicklungen des Prinzips der einschichtigen Radhausauskleidung auf Kunststoffbasis, die zusätzlich eine geräuschmindernde Funktion haben, wurden in der DE 34 28 906 A1 sowie in der DE 33 43 402 A1 beschrieben. Der schalldämmende Effekt wird hier durch eine gedämpft schwingende, beziehungsweise elastische Befestigung der Radhausauskleidung an der Karosserie gewährleistet sowie durch ein zäh-elastisches Kunststoffmaterial, das mit mineralischen Füllstoffen verstärkt ist. Zusätzlich weisen diese Radhausauskleidungen in Laufrichtung des Rades verlaufende V-förmige Rillen beziehungsweise sphärische Vertiefungen auf, die eine Verwirbelung des auftreffenden Spritzwassers bewirken, das Auftreten von Sprühnebel verhindern, beziehungsweise zusätzlich als Hohlkammerresonator gegen tiefere Frequenzen Lärmschutz bieten. Eine Gewichtsersparnis gegenüber Elementen dieser Art wird in der DE 198 17 567 C2 dadurch realisiert, dass der mit mineralischen Füllstoffen verstärkte Kunststoff lediglich als Skelett dient, das in den ausgesparten Flächenbereichen textiles Kunststoffmaterial mit Teppich-artiger Oberfläche, beispielsweise Faservliese trägt.

Eine ähnliche Idee liegt der DE 199 30 762 A1 zugrunde, in der ein leichtes Rahmengerüst aus Kunststoff mit einer auf der Rückseite angebrachten Kunststofffolie, gegebenenfalls mit einer Kunststoffdoppelfolie in Sandwichbauweise beschrieben wird, oder ein solches Rahmengerüst, das auf beiden Seiten mit einer entsprechenden Kunststofffolie, die einen Zwischenraum lässt, bedeckt ist. Hier wird neben einem Spritzwasser- und Korrosionsschutz eine Geräuschdämmung durch die flexible Folie erreicht. Eine besondere Ausstattung, die einen Schutz vor Sprühnebelbildung bewirkt, wird jedoch nicht beschrieben.

Durch Verwendung desselben Kunststoffmaterials für beide Flächenbereiche (Textil und Skelett) soll eine hohe Wiederverwendbarkeit der Materialien gewährleistet sein. Nachteile hierfür stellen jedoch verschiedene Modifikationen des Kunststoffs der Skelettflächenbereiche wie auch der komplizierte Aufbau dieser Radhausauskleidungen dar, der das Trennen der verschiedenen Kunststoffe wesentlich erschwert.

In den DE 196 34 615 A1 und DE 197 29 804 A1 werden schallabsorbierende Bauteile beschrieben, bei denen Kammern dünne Seitenwände aufweisen und akustische Resonatoren, sogenannte Kammer- oder Helmholtz-Resonatoren bilden. Sie werden in Tiefziehverfahren aus Folien mit einem Gitter hergestellt und sind gegebenenfalls zusätzlich mit Polypropylen-beschichteten Aluminiumbändern oder Dämpfungsvliesen beschichtet. Diese Bauteile dienen in erster Linie als Motorhaubenabsorber und haben den entscheidenden Nachteil, dass sie kompliziert und dementsprechend teuer in der Herstellung sind und einen hohen Platzbedarf benötigen.

Weitere Nachteile sind, dass für die mechanische Stabilität ein Verstärkungsgitter benötigt wird und die Schallabsorption mit Helmholtz-Resonatoren nur in einem sehr kleinen, nicht veränderbaren Frequenzbereich wirkt. Helmholtz-Resonatoren oder Lochabsorber werden auch in einer schalldämmenden Auskleidung gemäß DE 44 15 983 A1 verwendet, bei der es sich um eine Mehrschichten-Anordnung mit einem von einem schallabsorbierenden Material gefüllten Abschnitt handelt, der von biegeharten (Kunststoff/Metall) oder biegeweichen (Gummi, Kunststoff) Materialien eingefasst ist. Im letzteren Fall kann durch Druckluftbeaufschlagung eine weitgehende Selbstreinigung wie auch eine gute Schalldämpfung erreicht werden. Weiterhin wird vorgeschlagen eine biegsame wasserundurchlässige Folie oder zusätzlich Röhrenabsorber aufzubringen. Der komplizierte Aufbau, wie auch die schlechte Wiederverwertbarkeit wegen der Verwendung unterschiedlichster Materialien stehen einer großtechnischen Verwendung dieser Auskleidungen jedoch entgegen.

Die EP 0 091 419 A2 beschreibt eine mehrschichtige laminierte Kunststoffauskleidung insbesondere für LKW, die auf einer Kernschicht, beispielsweise Vlies mit Kleberschicht und einer über eine polymere Zwischenschicht klebefrei damit verbundenen grasartigen Schicht aus Kunststoff besteht. Diese Auskleidung bietet in einem weiten Temperaturbereich einen mechanisch beständigen Schutz vor Korrosion und Sandstrahleffekt und durch die grasartige Schicht insbesondere gegen Sprühnebelbildung. Das Verfahren zur Herstellung ist jedoch ebenfalls sehr aufwendig in der Herstellung und durch die schlechte Verformbarkeit der Materialien in der Anwendung begrenzt.

Offenporige Materialien, die aus Textilvlies, Kunststoffschaum oder Borsten bestehen, und als Radhausauskleidung mit dem Radhaus über lösbare oder nicht lösbare Verbindungen angebracht sind wurden bereits in einigen Fällen als Materialien für Geräusch-dämpfende Radhausauskleidungen beschrieben. So beschreibt die DE 299 16 210 U1 ein tragendes Kunststoffteil, beispielsweise eine Radhausschale mit oberseitig oder unterseitig angebrachtem Polvlies. Eine Radhausschale, die aus einem binderverfestigten selbsttragenden Nadelvlies besteht, wurde als geräuschdämpfende Auskleidung, die daneben Schutz gegen Sprühnebelbildung bereiten soll, beschrieben.

In der DE 298 07 563 U1 wird ebenso ein mit Kunststoff verfestigtes Vlies als geräuschmindernde Beschichtung auf einem tragenden Teil aus thermoverformbaren spritzgießbaren Thermoplasten als Radhausauskleidung beschrieben, die über eine elastische Verbindung geräuschdämpfend im Radhaus verankert wird. Diese Bauteile, die auf der radzugewandten Seite der Radhausauskleidung offenporige Materialien zur Schallabsorption, wie beispielsweise Vliese aufweisen, können jedoch direkt mit Wasser in Verbindung kommen. Hierbei wirkt sich die schallabsorbierende Offenporigkeit und große Oberfläche der Materialien zum Nachteil aus, da die Bauteile insbesondere beim Gefrieren das zwei- bis dreifache ihres Gewichtes and Wasser einlagern können sowie die Eisschichtbildung auf solchen Oberflächen begünstigt wird, so dass in diesem Falle das Gewicht 5 bis 6 mal so hoch sein kann. Ferner kann das ganze Radhaus zufrieren und beim Einfedern des Rades, aufgrund der guten Verbindung zwischen Eisschicht und Vlies die Radhausschale herausreißen. Einen ähnlichen nachteiligen Effekt haben Schmutz und Schlammpartikel, die sich mit der Zeit in poröse Vliesmaterialien ansammeln.

In der DE 35 39 146 A1 (EP 0 222 193 A3) wird eine Radhausauskleidung vorgeschlagen, die aus einer Schale aus genadeltem Kunststofffaservlies besteht, das an der Rückseite durch eine Kunststoffbeschichtung wasserundurchlässig gemacht worden ist und gegebenenfalls auch an der dem Rad zugewandten Seite mit einer wasserundurchlässigen Beschichtung aus elastischem Kunststoff versehen ist. Alternativ hierzu wird auch eine Radhausauskleidung beschrieben, die aus einem Trägermaterial besteht, das beidseitig mit Kunststofffaservlies bedeckt ist. Durch den vielschichtigen Aufbau kommt diesen Bauteilen ein ungünstig hohes Gewicht zu; sie sind aufwendig herzustellen und nur schwer wiederverwertbar.

Eine schalldämmende Spritzwasserschutz-Auskleidung, die den Nachteil der offenporigen Vliese vermeidet, wird ebenso in der DE 44 43 678 A1 beschrieben. Hier besteht die Spritzwasserauskleidung aus einem Verbundschichtaufbau aus einer schlagfesten schalldurchlässigen Spritzschutzschicht und einer schallabsorbierenden Schicht aus einer Absorbermatte, die beispielsweise aus offenporiger Kunststoffschaummatte oder aus Resonatoren oder Membranabsorbern besteht. Zur Schalldämmung und als Sprühnebelschutz können hier in der äußeren schalldurchlässigen Spritzschutzschicht Vertiefungen mit offenem Boden eingelassen sein. Die schlagfeste schalldurchlässige Spritzschutzschicht kann dieser Druckschrift gemäß auch durch ein Vlies ersetzt sein. Ein Nachteil einer dem gemäßen Radhausauskleidung besteht darin, dass für die mechanische Festigkeit noch eine dritte Schicht nötig, wodurch Herstellung und besonders Wiederverwertbarkeit erheblich erschwert werden.

Im allgemeinen ist das Recycling der Bauteile, die aus akustischen Gründen Vliese oder Schäume verwenden, erschwert. Zum einen deswegen, weil nur sehr wenig oder gar kein aus der Wiederverwertung zurückgeführtes Vlies eingesetzt werden kann, um eine für Sichtteile notwendige reproduzierbare Farbe zu gewährleisten, und zum anderen weil Imprägnierung und andere verwendete Kunststoffmaterialien häufig nicht aus demselben thermoplastischen Werkstoff bestehen wie die Fasern. Diese Imprägnierung mit meist duroplastischen Kunststoffen ist bei vielen Faservliesen notwendig, insbesondere wenn eine bestimmte Steifigkeit erzielt werden muss. Von Nachteil ist in diesem Fall damit geringere Grad an Schallabsorption im Gegensatz zu einem nicht mit Binder verfestigten Vlies.

Die Aufgabe der vorliegenden Erfindung bestand somit darin, eine Fahrzeug-Radhausauskleidung bereitzustellen, die einen Schutz vor Korrosion und Sandstrahleffekt des Spritzwassers gewährleistet, eine effektive Geräuschdämpfung gegenüber Körper- und Luftschall von außen bietet und die Reflexion von Schall, der aus dem Innenraum auf die Radhausauskleidung auftrifft, vermeidet, bzw. Schall absorbiert.

Dabei sollen die Bauteile einfach herzustellen sein, eine geringes Flächengewicht aufweisen und vollständig wiederverwertbar sein.

Die Aufgabe wird in einer ersten Ausführungsform gelöst durch eine Fahrzeug-Radhausauskleidung, die im wesentlichen der Kontur des Radhauses angepasst und an diesem befestigt ist, dadurch gekennzeichnet, dass sie aus einer wasserabweisenden selbsttragenden Kunststofffolie auf der radzugewandten Seite und einem Vlies aus Kunststofffasern auf der radabgewandten Seite besteht, und die Kunststofffolie und die Kunstofffasern jeweils vorzugsweise aus demselben, insbesondere thermoplastischen Werkstoff bestehen.

Durch einen solchen Verbund wird Körperschallanregung, beispielsweise durch Spritzwasser oder Steinschlag durch den hohen inneren Verlustfaktor und das E-Modul durch den Feder/Masse-Aufbau absorbiert und die ungedämpfte Reflexion von Schall aus dem Innenraum in diesen zurück vermieden. Durch die glatte Oberfläche der wasserabweisenden selbsttragenden Kunststofffolie wird eine gute Selbstreinigung und eine geringe Wasseraufnahme gewährleistet. Der zweischichtige Aufbau unter Verwendung eines Vlieses mit hoher Schallabsorptionsfähigkeit wird möglich durch die Verwendung der selbsttragenden wasserabweisenden Folie.

Eine vollständige und einfache Wiederverwertung wird erreicht durch die Verwendung des gleichen Kunststoffwerkstoffs für die Kunststofffolie und die Kunststofffasern des Vlieses, insbesondere eines Nadelvlieses, wodurch sich die Werkstoffe durch Einfaches Einschmelzen des Bauteils und Wiederextrudieren oder Spritzgießen zurückgewinnen lassen.

In einer weiteren Ausführungsform ist die Fahrzeug-Radhausauskleidung im wesentlichen der Kontur des Radhauses angepasst und an diesem befestigt. Diese ist dadurch gekennzeichnet, dass sie aus einer wasserabweisenden selbsttragenden Kunststofffolie auf der radzugewandten Seite und einem Nadelvlies aus Kunststofffasern auf der radabgewandten Seite besteht, und die Kunststofffolie und die Kunstofffasern kleberfrei miteinander verbunden sind. Die Wiederverwertung der Werkstoffe ist in diesem Fall durch Spalten möglich, das heißt durch Trennen der Schichten, Schmelzen der Folie und Reißen des Vlieses.

Besonders bevorzugt im Sinne der vorliegenden Erfindung sind Radhausauskleidungen, bei denen die Kunststofffolie und die Kunststofffaser aus demselben thermoplastischen Werkstoff bestehen und kleberfrei miteinander verbunden sind. Alternativ ist es jedoch auch möglich, die Kunststofffolie und die Kunststofffasern des Vlieses aus unterschiedlichen Materialien herzustellen.

Um optimale Schalldämmeigenschaften zu gewährleisten, soll die Kunststofffolie eine gute Körperschalldämpfung, ausgedrückt durch den dimensionslosen Verlustfaktor von 0,1 bis 0,3 aufweisen.

Das Gleiche gilt für das Vlies, jedoch sollte der Strömungswiderstand von 300 Pa s/m bis 4000 Pa s/m betragen.

Aus demselben Grund soll die Festigkeit der Kunststofffolie in einem geeigneten Bereich ausgewählt werden. Der Elastizitätsmodul der Kunststofffolie sollte vorzugsweise einen Wert von 50 MPa bis 10000 MPa, bevorzugt 600 MPa bis 1000 MPa aufweisen.

Eine zusätzlich isolierende Wirkung wird erreicht, wenn die Kunststofffolie auf der radzugewandten Seite geschlossen ausgeführt wird, somit den Radhauskasten nach außen verschließt.

Von besonderem Vorteil ist, wenn die Kunststofffolie thermoplastische Kunststoffe, insbesondere Polyolefin, darunter bevorzugt Polypropylen, Polyethylenterephthalat, Polyethylen, Polybutylenterephthalat und/oder Polyamid enthält.

In einer weiteren Ausführungsform weist diese Kunststofffolie ein Flächengewicht von 300 bis 9000 g/m², insbesondere 500 bis 2000 g/m² auf.

Das Vlies kann bevorzugt aus vernadelten Polypropylen- oder Polyethylenterephthalat-haltigen Fasern bestehen. Hier ist von besonderem Vorteil, wenn das (Nadel)vlies ein Flächengewicht von 100 bis 5000 g/m², bevorzugt 500 bis 1500 g/m².

Hierdurch wirkt das (Nadel)vlies zusätzlich als Absorber für Schall, der aus dem Innenraum, von der radabgewandten Seite kommend auf die Radhausauskleidung auftrifft. Durch die geschlossene Oberfläche der wasserabweisenden Folie auf der radzugewandten Seite, wird der Schall wieder reflektiert; und so können durch gezielte Wahl der Dicke der Vliesschicht über die Beziehung λ/4 = d und Änderung des Strömungswiderstandes des Vlieses einzelne besonders störende Lärmfrequenzen eliminiert werden. Hierbei steht λ für die Frequenz des auftretenden Schalls und d für die Dicke der Vliesschicht.

In einer weiteren Ausführungsform weist die Fahrzeug-Radhausauskleidung in dem hinter dem Rad gelegenen Bereich eine Struktur mit Vertiefungen auf, insbesondere eine rillenartige Struktur parallel zur Drehrichtung des Rades, beispielsweise in Form V-förmiger Rillen, die derart ausgebildet sind, dass auf das auftreffende und abzuführende Spritzwasser eine Querbeschleunigung ausgeübt wird. Auf diese Weise wird die Sprühnebelbildung beim Fahren auf regennasser Fahrbahn wirksam unterdrückt.

## Patentansprüche

1. Fahrzeug-Radhausauskleidung, die im wesentlichen der Kontur des Radhauses angepasst und an diesem befestigt, **dadurch gekennzeichnet, dass** sie aus einer wasserabweisenden selbsttragenden Kunststofffolie auf der radzugewandten Seite und einem Vlies aus Kunststofffasern auf der radabgewandten Seite besteht.

2. Fahrzeug-Radhausauskleidung im wesentlichen der Kontur des Radhauses angepasst und an diesem befestigt, **dadurch gekennzeichnet, dass** sie aus einer wasserabweisenden selbsttragenden Kunststofffolie auf der radzugewandten Seite und einem Vlies aus Kunststofffasern auf der radabgewandten Seite besteht, und die Kunststofffolie und die Kunstofffasern kleberfrei miteinander verbunden sind.

3. Fahrzeug-Radhausauskleidung nach Anspruch 1 oder 2 **dadurch gekennzeichnet, dass** die Kunststofffolie und die Kunststofffaser jeweils aus demselben, insbesondere thermoplastischen Werkstoff bestehen.

4. Fahrzeug-Radhausauskleidung nach Anspruch 1 oder 2 **dadurch gekennzeichnet, dass** die Kunststofffolie und die Kunststofffaser jeweils aus unterschiedlichen Kunststoffen bestehen.

5. Fahrzeug-Radhausauskleidung nach Anspruch 1 bis 4 **dadurch gekennzeichnet, dass** die Kunststofffolie Polypropylen, Polyethylenterephthalat, Polyethylen, Polybutylenterephthalat und/oder Polyamid enthält.

6. Fahrzeug-Radhausauskleidung nach einem der Ansprüche 1 bis 5, **dadurch gekennzeichnet, dass** das Vlies einen Strömungswiderstand von 300 Pa·s/m bis 4000 Pa·s/m aufweist.

7. Fahrzeug-Radhausauskleidung nach einem der Ansprüche 1 bis 6 **dadurch gekennzeichnet, dass** die Kunststofffolie einen Verlustfaktor von 0,1 bis 0,3 aufweist.

8. Fahrzeug-Radhausauskleidung nach einem der Ansprüche 1 bis 7, **dadurch gekennzeichnet, dass** die Kunststofffolie einen Elastizitätsmodul von 50 MPa bis 10000 MPa, insbesondere 600 MPa bis 1000 MPa aufweist.

9. Fahrzeug-Radhausauskleidung nach einem der Ansprüche 1 bis 8, **dadurch gekennzeichnet, dass** die Kunststofffolie geschlossen ist.

10. Fahrzeug-Radhausauskleidung nach einem der Ansprüche 1 bis 9, **dadurch gekennzeichnet, dass** die Kunststofffolie ein Flächengewicht von 300 bis 9000 g/m², insbesondere 500 bis 2000 g/m² aufweist.

11. Fahrzeug-Radhausauskleidung nach einem der Ansprüche 1 bis 10, **dadurch gekennzeichnet, dass** das Vlies ein Nadelvlies ist.

12. Fahrzeug-Radhausauskleidung nach einem der Ansprüche 1 bis 11, **dadurch gekennzeichnet, dass** das Vlies aus vernadelten Polypropylen-, Polyethylenterephthalat-, Polyethylen-, Polybutylenterephthalat- und/oder Polyamid-haltigen Fasern besteht.

13. Fahrzeug-Radhausauskleidung nach einem der Ansprüche 1 bis 12, **dadurch gekennzeichnet, dass** das Vlies ein Flächengewicht von 100 bis 5000 g/m², insbesondere 500 bis 1500 aufweist.

14. Fahrzeug-Radhausauskleidung nach einem der Ansprüche 1 bis 13, **dadurch gekennzeichnet, dass** sie in dem hinter dem Rad gelegenen Bereich eine Struktur mit Vertiefungen, insbesondere eine rillenartige, parallel zur Drehrichtung des Rades, zum Beispiel in Form V-förmiger Rillen, verlaufende Struktur aufweist, die derart ausgebildet sind, dass auf das auftreffende und abzuführende Spritzwasser eine Querbeschleunigung ausgeübt wird.

## Claims

1. A vehicle undershield which is essentially conformed to the shape of the wheel housing and attached thereto, **characterized by** consisting of a water-repellent self-supporting plastic sheet on the side facing towards the wheel, and of a non-woven made of plastic fibers on the side facing away from the wheel.

2. A vehicle undershield which is essentially conformed to the shape of the wheel housing and attached thereto, **characterized by** consisting of a water-repellent self-supporting plastic sheet on the side facing towards the wheel, and of a non-woven made of plastic fibers on the side facing away from the wheel, and in that said plastic sheet and plastic fibers are non-adhesively bonded to one another.

3. The vehicle undershield according to claim 1 or 2, **characterized in that** said plastic sheet and plastic fibers consist of the same material, which may be a thermoplastic material, in particular.

4. The vehicle undershield according to claim 1 or 2, **characterized in that** said plastic sheet and plastic fibers consist of different materials.

5. The vehicle undershield according to claim 1 to 4, **characterized in that** said plastic sheet contains polypropylene, polyethylene terephthalate, polyethylene, polybutylene terephthalate and/or polyamide.

6. The vehicle undershield according to any of claims 1 to 5, **characterized in that** said non-woven has a flow resistance of from 300 Pa·s/m to 4000 Pa·s/m.

7. The vehicle undershield according to any of claims 1 to 6, **characterized in that** said plastic sheet has a loss factor of from 0.1 to 0.3.

8. The vehicle undershield according to any of claims 1 to 7, **characterized in that** said plastic sheet has a modulus of elasticity of from 50 MPa to 10,000 MPa, preferably from 600 MPa to 1000 MPa.

9. The vehicle undershield according to any of claims 1 to 8, **characterized in that** said plastic sheet is closed.

10. The vehicle undershield according to any of claims 1 to 9, **characterized in that** said plastic sheet has a weight per unit area of from 300 to 9000 g/m², especially from 500 to 2000 g/m².

11. The vehicle undershield according to any of claims 1 to 10, **characterized in that** said non-woven is a needle-punched web.

12. The vehicle undershield according to any of claims 1 to 11, **characterized in that** said non-woven consists of needle-punched fibers containing polypropylene, polyethylene terephthalate, polyethylene, polybutylene terephthalate and/or polyamide.

13. The vehicle undershield according to any of claims 1 to 12, **characterized in that** said non-woven has a weight per unit area of from 100 to 5000 g/m², especially from 500 to 1500 g/m².

14. The vehicle undershield according to any of claims 1 to 13, **characterized by** having a structure with recesses in the region lying behind the wheel, especially a groove-like structure running in parallel with the direction of rotation of the wheel, for example, in the form of V-shaped grooves which have such a design that a transversal acceleration is applied to the impinging spray water to be dissipated.

## Revendications

1. Revêtement d'aile pour véhicules essentiellement adapté au contour de l'aile et fixé sur celle-ci, **caractérisé en ce qu'**il consiste en une feuille plastique autoportante hydrofuge sur le côté tourné vers la roue et un non-tissé constitué de fibres plastiques sur le côté opposé à la roue.

2. Revêtement d'aile pour véhicules essentiellement adapté au contour de l'aile et fixé sur celle-ci, **caractérisé en ce qu'**il consiste en une feuille plastique autoportante hydrofuge sur le côté tourné vers la roue et un non-tissé constitué de fibres plastiques sur le côté opposé à la roue, et ladite feuille plastique est liée avec lesdites fibres plastiques sans adhésif.

3. Revêtement d'aile pour véhicules selon la revendication 1 ou 2, **caractérisé en ce que** ladite feuille plastique et lesdites fibres plastiques sont constituées du même matériau, notamment du même matériau thermoplastique.

4. Revêtement d'aile pour véhicules selon la revendication 1 ou 2, **caractérisé en ce que** ladite feuille plastique et lesdites fibres plastiques sont constituées de matériaux plastiques différents.

5. Revêtement d'aile pour véhicules selon la revendication 1 à 4, **caractérisé en ce que** ladite feuille plastique contient du polypropylène, du téréphtalate de polyéthylène, du polyéthylène, du téréphtalate de polybutylène et/ou du polyamide.

6. Revêtement d'aile pour véhicules selon l'une quelconque des revendications 1 à 5, **caractérisé en ce que** ledit non-tissé a une résistance à l'écoulement de 300 Pa·s/m à 4000 Pa·s/m.

7. Revêtement d'aile pour véhicules selon l'une quelconque des revendications 1 à 6, **caractérisé en ce que** ladite feuille plastique a un facteur de pertes de 0,1 à 0,3.

8. Revêtement d'aile pour véhicules selon l'une quelconque des revendications 1 à 7, **caractérisé en ce que** ladite feuille plastique a un module d'élasticité de 50 MPa à 10000 MPa, notamment de 600 MPa à 1000 MPa.

9. Revêtement d'aile pour véhicules selon l'une quelconque des revendications 1 à 8, **caractérisé en ce que** ladite feuille plastique est fermée.

10. Revêtement d'aile pour véhicules selon l'une quelconque des revendications 1 à 9, **caractérisé en ce que** ladite feuille plastique a un poids au m² de 300 à 9000 g/m², notamment de 500 à 2000 g/m².

11. Revêtement d'aile pour véhicules selon l'une quelconque des revendications 1 à 10, **caractérisé en ce que** ledit non-tissé est un non-tissé (feutre) aiguilleté.

12. Revêtement d'aile pour véhicules selon l'une quelconque des revendications 1 à 11, **caractérisé en ce que** ledit non-tissé est constitué de fibres de polypropylène, de téréphtalate de polyéthylène, de polyéthylène, de téréphtalate de polybutylène et/ou de polyamide aiguilletées.

13. Revêtement d'aile pour véhicules selon l'une quelconque des revendications 1 à 12, **caractérisé en ce que** ledit non-tissé a un poids au m² de 100 à 5000 g/m², notamment de 500 à 1500 g/m².

14. Revêtement d'aile pour véhicules selon l'une quelconque des revendications 1 à 13, **caractérisé en ce qu'**il comporte une structure avec des creux dans la zone située derrière la roue, notamment une structure de gorges allant parallèle à la direction de rotation de la roue, par exemple en forme des gorges en V, formées pour exercer une accélération transversale sur l'eau projetée là-dessus devant être éliminée.
